# EUROPÄISCHE PATENTANMELDUNG

(11) **EP 4 357 624 A1**
(43) Veröffentlichungstag der Anmeldung: **24.04.2024**
(21) Anmeldenummer: 23204240.8
(22) Anmeldetag: 18.10.2023
(51) Int. Cl.: F15B 13/044, F16K 31/06, H01F 7/06, H01F 7/128

(54) **ELEKTROHYDRAULISCHER AKTUATOR**

(30) Priorität: 21.10.2022 DE 102022127886; 17.10.2023 DE 102023128383
(71) Anmelder: Thomas Magnete GmbH, 57562 Herdorf (DE)
(72) Erfinder: Schmidt, Jan Silas, 57290 Neunkirchen (DE); Hüsch, Andreas, 57629 Malberg (DE); Hombach, Gregor, 57581 Katzwinkel (DE); Becker, Christian, 57290 Neunkirchen (DE); Bechheim, Bernd, 58509 Lüdenscheid (DE)

(57) **Zusammenfassung**

Die Erfindung betrifft einen elektrohydraulischen Aktor (1) aufweisend zumindest ein Hydraulikventil (2a, 2b) mit einer elektrischen Spule (3a, 3b), zumindest einen Rahmen (4a, 4b, 4c) aus einem weichmagnetischen Material, der die Spule (3a, 3b) bezüglich einer ersten Raumrichtung (100) und einer zweiten Raumrichtung (200) umgibt und bezüglich einer dritten Raumrichtung (300) nicht oder nicht vollständig verdeckt, eine Steuerplatine (5) zur Steuerung der Spule (3a, 3b) des Hydraulikventils (2a, 2b), und ein Gehäuse (6a, 6b), wobei das Gehäuse (6a, 6b) die Spule (3a, 3b) und die Steuerplatine (5) mediendicht umschließt und zumindest einen elektrischen Anschluss (7a, 7b) zum elektrischen Kontaktieren der Steuerplatine (5) aufweist, wobei der Rahmen (4a, 4b, 4c) zumindest teilweise außerhalb des Gehäuses (6a, 6b) angeordnet ist.

## Beschreibung

Die Erfindung betrifft einen elektrohydraulischen Aktuator. Dieser elektrohydraulische Aktuator wird im Folgenden elektrohydraulischer Aktor genannt.

Aus dem Stand der Technik sind elektrohydraulische Aktoren bekannt, wie sie z.B. in Kränen oder Kommunalfahrzeugen verwendet werden. Diese weisen üblicherweise ein Gehäuse auf, in dem Proportionalventile angeordnet sind, wobei das Gehäuse den magnetischen Schluss des Proportionalventils sicherstellt. Gleichzeitig dient das Gehäuse zur mediendichten Schirmung von elektronischen Komponenten des Aktors. Durch das Gehäuse ist der Aktor allerdings groß und schwer.

Es ist Aufgabe der Erfindung einen elektrohydraulischen Aktor bereitzustellen, der bei kostengünstiger Herstellung und Montage geringe Abmessungen und ein geringes Gewicht aufweist.

Die Lösung dieser Aufgabe erfolgt durch die Merkmale des unabhängigen Anspruchs. Die Unteransprüche haben bevorzugte Weiterbildungen der Erfindung zum Inhalt.

Somit wird die Aufgabe gelöst durch einen elektrohydraulischen Aktor, der zumindest ein Hydraulikventil, insbesondere mehrere Hydraulikventile aufweist. Das zumindest eine Hydraulikventil weist eine elektrische Spule auf. Über die elektrische Spule lässt sich ein Schieber des Hydraulikventils verstellen, um so einen gewünschten Hydraulikfluss einstellen zu können. Auf diese Weise lassen sich zu aktuierende Systeme hydraulisch betätigen. Das Hydraulikventil ist insbesondere ein Proportionalventil.

Weiterhin weist der Aktor zumindest einen Rahmen auf, der aus einem weichmagnetischen Material gefertigt ist. Der Rahmen ermöglicht einen magnetischen Schluss des Hydraulikventils. Insbesondere ist der Rahmen aus einem metallischen Werkstoff gefertigt.

Es ist bevorzugt vorgesehen, dass der Rahmen die Spule bezüglich einer ersten Raumrichtung und einer zweiten Raumrichtung umgibt. Dies bedeutet insbesondere, dass ausgehend von der Spule jede Gerade, die sich entlang der jeweiligen Raumrichtung in positive oder negative Richtung erstreckt, den Rahmen schneidet. Bezüglich einer dritten Raumrichtung ist vorgesehen, dass die Spule durch den Rahmen nicht oder nicht vollständig verdeckt ist. Somit ist bezüglich der dritten Raumrichtung kein Rahmen um die Spule vorgesehen. Mit anderen Worten bilden die erste Raumrichtung und die zweite Raumrichtung eine Ebene, innerhalb der die Spule durch den Rahmen, insbesondere ringförmig, umschlossen ist. In einer Ebene, die durch die dritte Raumrichtung und die erste Raumrichtung oder durch die dritte Raumrichtung und die zweite Raumrichtung aufgespannt wird, ist die Spule nicht oder nicht vollständig durch den Rahmen umschlossen. Für den magnetischen Schluss ist ausreichend, dass die Spule lediglich in der zweiten Raumrichtung und dritten Raumrichtung umschlossen ist. Durch das Freilassen der Spule bezüglich der dritten Raumrichtung kann der Aktor in der dritten Raumrichtung dünner ausgestaltet werden, da keine zusätzliche Materialdicke durch den Rahmen vorhanden ist. Somit ist der Aktor kompakt und gewichtssparend herstellbar. Der Rahmen ist insbesondere ein Stanzbiegeteil und/oder aus mehreren Stanzbiegeteilen zusammengesetzt. Das Hydraulikventil ist an dem Rahmen bevorzugt befestigt.

Weiterhin weist der Aktor insbesondere eine Steuerplatine zur Steuerung der Spule des Hydraulikventils auf. Sind mehrere Hydraulikventile vorhanden, so dient die Steuerplatine bevorzugt zum Steuern jeder Spule des jeweiligen Hydraulikventils separat. Ist das Hydraulikventil bevorzugt ein Proportionalventil, so ist insbesondere vorgesehen, dass die Steuerplatine einen vorgegebenen Fluidfluss durch das Hydraulikventil einstellt.

Der Aktor weist bevorzugt außerdem ein Gehäuse auf. Das Gehäuse umschließt die Spule und die Steuerplatine mediendicht. Außerdem weist das Gehäuse zumindest einen elektrischen Anschluss zum elektrischen Kontaktieren der Steuerplatine auf. Der elektrische Anschluss umfasst insbesondere ein durch das Gehäuse gebildetes Steckverbindergehäuse, in dem Steckkontakte vorhanden sind, die innerhalb des Gehäuses die Steuerplatine kontaktieren. Der elektrische Anschluss ist insbesondere die einzige Schnittstelle des Gehäuses nach außen. Durch das Gehäuse sind die Steuerplatine und die Spule vor äußeren Einflüssen geschützt. Bevorzugt ist vorgesehen, dass das Gehäuse magnetisch nichtleitend ausgebildet ist. Ein Magnetschluss des Hydraulikventils findet somit durch das Gehäuse nicht statt.

Dabei ist insbesondere vorgesehen, dass der Rahmen zumindest teilweise, insbesondere vollständig, außerhalb des Gehäuses angeordnet ist. Somit umschließt der Rahmen insbesondere die von dem Gehäuse umgebende Spule und damit auch den die Spule umgebenden Teil des Gehäuses. Dadurch ist wiederum eine geringe Abmessung in der dritten Raumrichtung gegeben, da eine Abmessung des Aktors in der dritten Raumrichtung lediglich durch die Spule und das Gehäuse vorgegeben ist, wobei das Gehäuse insbesondere keinen magnetischen Schluss erlauben muss.

Bevorzugt weist das Gehäuse einen Hauptteil und einen Deckelteil auf. Dabei bildet der Hauptteil eine Aufnahme für die Steuerplatine, wobei der Hauptteil durch den Deckelteil verschlossen ist. Dadurch ist einerseits eine Aufnahme der Steuerplatine im Gehäuse, andererseits ein Abschirmen der Steuerplatine vor äußeren Einflüssen erreicht.

Der Deckelteil ist mit dem Hauptteil bevorzugt stoffschlüssig verbunden, insbesondere verschweißt. Durch die stoffschlüssige Verbindung ist insbesondere eine Abdichtung erreicht. Das Gehäuse schließt bevorzugt die Steuerplatine und/oder die Spule bevorzugt mediendicht ein. Alternativ ist bevorzugt vorgesehen, dass der Deckelteil und der Hauptteil lösbar miteinander verbunden sind, insbesondere durch Verschrauben oder Verrasten. Um ein Eindringen von Fluid in das Gehäuse zu erschweren oder verhindern, ist besonders vorteilhaft eine Dichtung zwischen Deckelteil und Hauptteil vorgesehen. Somit ist einerseits eine einfach und kostengünstige Montage des Gehäuses erreicht, anderseits ist ein Austausch der Steuerplatine oder ein sonstiger Zugriff auf Komponenten innerhalb des Gehäuses zerstörungsfrei ermöglicht.

Weiterhin ist bevorzugt vorgesehen, dass das Gehäuse durch Umspritzen der Spule ausgebildet ist. Die Spule ist somit unbeweglich innerhalb des Gehäuses angeordnet. Die Spule ist außerdem durch das Umspritzen vor äußeren Einflüssen geschützt und insbesondere mediendicht umschlossen. Besonders vorteilhaft ist außerdem vorgesehen, dass Anschlussleitungen der Spule von dem Gehäuse umspritzt sind. Die Anschlussleitungen enden bevorzugt an der Aufnahme für die Steuerplatine, wodurch ein einfaches elektrisches Kontaktieren der Steuerplatine ermöglicht ist. Insbesondere sind Press-Fit Kontakte vorgesehen, sodass ein Einsetzten der Steuerplatine gleichzeitig zu einem Kontaktieren der Spule erfolgt. Durch das Umspritzen der Anschlussleitungen der Spule und durch das mediendichte Verschließen der Aufnahme mittels des zuvor beschriebenen Deckels lässt sich bevorzugt eine vollständige mediendichte Kapselung der elektronischen Komponenten des Aktors einfach und zuverlässig erreichen.

Das Gehäuse ist bevorzugt aus einem Kunststoff gefertigt. Der Kunststoff ist insbesondere medienbeständig und somit beständig gegenüber Hydrauliköl und/oder sonstigen korrosiven Medien. Der Kunststoff ist insbesondere durch ein Gussverfahren verarbeitbar, beispielsweise durch Spritzguss. Eine magnetische Leitfähigkeit des Gehäuses ist nicht notwendig, bevorzugt ist vorgesehen, dass der Kunststoff magnetisch nicht leitend ist. Die Verwendung eines Kunststoffs erlaubt ein geringes Gewicht des Aktors.

Das Gehäuse ist insbesondere einteilig ausgebildet. Dies bedeutet, dass das Gehäuse nicht zerstörungsfrei in mehrere Teile zerlegbar ist. Somit kann das Gehäuse einfach und zuverlässig während der Montage des Aktors gehandhabt werden. Eine Montage ist damit vereinfacht und eine Anzahl an Bauteilen des Aktors minimiert. Insbesondere ist die Spule relativ zu der Steuerplatine fixiert, was insbesondere bei Verwendung mehrerer Hydraulikventile und dadurch mehrerer Spulen eine Montage erheblich vereinfacht. Außerdem erlaubt die einteilige Ausgestaltung des Gehäuses eine zuverlässige Mediendichtheit. Bevorzugt weist das Gehäuse einen ersten elektrischen Anschluss und einen zweiten elektrischen Anschluss auf. Dabei ist vorgesehen, dass elektrische Kontaktelemente, insbesondere Pins, des ersten elektrischen Anschlusses und des zweiten elektrischen Anschlusses separat voneinander die Steuerplatine kontaktieren. Auf der Steuerplatine ist eine Verbindung korrespondierender elektrischer Kontaktelemente vorgesehen. Somit ist ermöglicht, einen weiteren Aktor oder ein weiteres anderes Gerät mit dem elektrohydraulischen Aktor zu verbinden. Durch die Verbindung der elektrischen Kontaktelemente erfolgt ein Durchschleusen von Steuersignalen und/oder Steuerspannungen zwischen dem ersten Anschluss und dem zweiten Anschluss. Dies ist insbesondere vorteilhaft bei in Fahrzeugen verwendeten Kommunikationssystem wie dem CAN-Bus oder dem LIN-Bus. Somit lassen sich mehrere Aktoren einfach mit einer zentralen Steuereinheit verbinden, indem diese in der Art einer Kette miteinander verbunden werden. Diese Verbindungsart wird auch Daisy Chain genannt. Eine solche Verbindungart erleichtert den Verkabelungsaufwand erheblich.

Der Rahmen weist vorteilhafterweise zumindest ein Topfelement auf. Dieses Topfelement umschließt die Spule zumindest ringförmig bzw. topfförmig. Die Spule ist somit in zwei Raumrichtungen von dem Topfelement umgeben, wobei es sich bei dem die Spule umgebenden Teil um die Mantelfläche des Topfelements handelt. In einer dritten Raumrichtung, die der Axialrichtung des Topfelements entspricht, ist die Spule nicht oder nur teilweise umgeben. Das Topfelement weist außerdem eine Grundfläche auf, die die Spule teilweise in der dritten Raumrichtung umgibt. Die Grundfläche kann eine durchgängige Fläche sein oder auch einen Ausschnitt aufweisen. Bevorzugt ist ein Ausschnitt vorgesehen, wobei elektrische Kontakte der Spule durch den Ausschnitt greifen, um mit der Steuerplatine elektrisch verbunden zu werden. Das Topfelement oder erlauben einen magnetischen Schluss des Hydraulikventils. Beispielsweise ist das Topfelement aus einem metallischen Werkstoff gefertigt.

In einer bevorzugten Ausführungsform ist ein erstes Hydraulikventil mit einer ersten Spule und ein zweites Hydraulikventil mit einer zweiten Spule vorgesehen. Somit erlaubt der Aktor das Steuern von zwei Hydraulikanschlüssen. Es ist weiterhin vorgesehen, dass die Spulen die Steuerplatine separat kontaktieren und innerhalb desselben Gehäuses angeordnet sind. Auf diese Weise ist einerseits der Aufbau des Aktors vereinfacht, andererseits ist eine zuverlässige Abdichtung gegenüber Medien gegeben. Durch die Verwendung desselben Gehäuses für beide Spulen ist erreicht, dass kein Gehäusedurchbruch für die Verkabelung der Spulen notwendig ist. Insbesondere ist vorgesehen, dass die Spulen und/oder deren Verkabelung mit der Steuerplatine durch das Gehäuse umspritzt sind. Somit ist insbesondere auch eine feste relative Anordnung der Spulen und damit der Hydraulikventile zueinander gegeben.

Besonders vorteilhaft weist der Rahmen einen C-förmigen ersten Abschnitt, einen C-förmigen zweiten Abschnitt und einen C-förmigen dritten Abschnitt auf. Der erste Abschnitt umgreift die erste Spule und der zweite Abschnitt umgreift die zweite Spule. Der dritte Abschnitt umgreift die erste Spule zusammen mit dem ersten Abschnitt und die zweite Spule zusammen mit dem zweiten Abschnitt. Dabei ist vorgesehen, dass die Abschnitte derart angeordnet sind, dass die erste Spule durch den ersten Abschnitt und einen Teil des dritten Abschnitts bezüglich der ersten Raumrichtung und der zweiten Raumrichtung ringförmig umschlossen ist. Alternativ oder zusätzlich ist die zweite Spule durch den zweiten Abschnitt und zumindest einen Teil des dritten Abschnitts bezüglich der ersten Raumrichtung und der zweiten Raumrichtung ringförmig umschlossen. Durch die Verwendung mehrerer C-förmiger Abschnitte ist der Rahmen einfach herstellbar und einfach montierbar. Insbesondere ist das Gehäuse an dem Rahmen befestigt, wobei der Rahmen bevorzugt eine Versteifung und/oder Verstärkung und/oder einen Schlagschutz des Gehäuses bewirkt. Der dritte Abschnitt liegt bevorzugt an dem ersten Abschnitt und an dem zweiten Abschnitt an. Durch das ringförmige Umschließen der Spule ist ein magnetischer Schluss vorhanden, wobei eine Abmessung in der dritten Raumrichtung durch den in dieser Richtung fehlenden Rahmen minimiert ist.

Jeder Abschnitt des Rahmens ist bevorzugt ein separates Stanzbiegeteil. Somit ist der Rahmen einfach und kostengünstig herstellbar. Insbesondere lassen sich C-Formen durch Biegen einfach und zuverlässig herstellen.

Bevorzugt weist der Rahmen ein erstes Topfelement und ein zweites Topfelement auf. Das erste Topfelement umschließt die erste Spule ringförmig, bevorzugt topfförmig, und das zweite Topfelement umschließt die zweite Spule ringförmig, bevorzugt topfförmig. Somit ist die erste Spule durch das erste Topfelement bezüglich der ersten Raumrichtung und der zweiten Raumrichtung ringförmig umschlossen. Alternativ oder zusätzlich ist die zweite Spule durch das zweite Topfelement bezüglich der ersten Raumrichtung und der zweiten Raumrichtung ringförmig umschlossen. Das Umschließen erfolgt mittels der Mantelfläche des jeweiligen Topfelements. Die dritte Raumrichtung entspricht der Axialrichtung des Topfelements, wobei die Spule hier nicht oder nur teilweise umgeben ist. Jedes Topfelement weist eine Grundfläche auf, die die Spule teilweise in der dritten Raumrichtung umgibt. Die Grundfläche kann eine durchgängige Fläche sein oder auch einen Ausschnitt aufweisen. Bevorzugt ist ein Ausschnitt vorgesehen, wobei elektrische Kontakte der jeweiligen Spule durch den jeweiligen Ausschnitt greifen, um mit der Steuerplatine elektrisch verbunden zu werden. Durch das Umschließen der jeweiligen Spule erlauben die Topfelemente einen magnetischen Schluss des Hydraulikventils. Außerdem weist der Rahmen bevorzugt ein Verbindungselement auf. Das Verbindungselement dient zum Verbinden des ersten Topfelements und des zweiten Topfelements. Besonders vorteilhaft sind die Topfelemente untrennbar oder einstückig mit dem Verbindungselement verbunden. Bevorzugt ist jedes Topfelement und/oder das Verbindungselement aus einem metallischen Werkstoff gefertigt. Außerdem ist bevorzugt vorgesehen, dass das erste Hydraulikventil in dem ersten Topfelement befestigt ist und/oder dass das zweite Hydraulikventil in dem zweite Topfelement befestigt ist. Auf diese Weise ist das eine einfache und zuverlässige Halterung des jeweiligen Hydraulikventils erreicht.

Das erste Topfelement und das zweite Topfelement sind in einer bevorzugten Ausgestaltung als separate Bauteile ausgebildet. Das erste Topfelement und/oder das zweite Topfelement sind besonders vorteilhaft Tiefziehbauteile. Es ist vorgesehen, dass das erste Topfelement und das zweite Topfelement an dem Verbindungselement befestigt sind. Die Befestigung erfolgt insbesondere durch eine formschlüssige und/oder stoffschlüssige und/oder kraftschlüssige Verbindung, beispielsweise durch Verstemmen und/oder Verkleben und/oder Verschweißen und/oder Verschrauben. Das Verbindungselement ist bevorzugt ein Stanzteil oder Stanzbiegeteil.

In einer besonders vorteilhaften Ausgestaltung weist das Verbindungselement Öffnungen auf, wobei jedes Topfelement durch eine der Öffnungen geführt ist. Auf diese Weise ist eine erste Verbindung zwischen Topfelementen und Verbindungselement erreicht. Zusätzlich ist eine zweite Verbindung vorgesehen wie zuvor beschrieben, d.h. die genannte formschlüssige und/oder stoffschlüssige und/oder kraftschlüssige Verbindung. Somit ist ein zuverlässiger Zusammenhalt des Rahmens gewährleistet.

In einer weiteren bevorzugten Ausgestaltung sind das erste das erste Topfelement und das zweite Topfelement und das Verbindungselement einstückig ausgebildet und insbesondere durch Tiefziehen hergestellt.

Der Rahmen ist bevorzugt separat von dem Gehäuse herstellbar. In einem Montageprozess lassen sich Rahmen und Gehäuse montieren. Dabei ist insbesondere vorgesehen, dass der Rahmen zerstörungsfrei von dem Gehäuse lösbar ist. Insbesondere ist keine Umspritzung des Rahmens durch das Gehäuse vorgesehen, sodass der Rahmen durch das Gehäuse vollständig von der Spule und der Steuerplatine getrennt ist.

Vorteilhafterweise weist der elektrohydraulische Aktor einen gegenüber dem Rahmen verschiebbaren Positionsschieber auf. Weiterhin ist bevorzugt vorgesehen, dass die Steuerplatine einen kontaktlosen Sensor, insbesondere Hallsensor, zum Erfassen eines Verschiebungszustandes des Positionsschiebers aufweist. Besonders vorteilhaft ist dazu an einem Bereich des Positionsschiebers ein zu detektierendes Element, beispielsweise ein Permanentmagnet, angebracht. Somit kann insbesondere ein geschlossener Regelkreis hergestellt werden, wodurch der Aktor ein zu aktuierendes System zuverlässig und genau betätigen kann. Der Positionsschieber ist durch das Gehäuse von der Steuerplatine getrennt.

Somit ist insbesondere kein Gehäusedurchbruch des Gehäuses notwendig. Dies verbessert die Mediendichtheit des Gehäuses.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine erste schematische Ansicht eines Aktors gemäß einem ersten Ausführungsbeispiel der Erfindung,
Fig. 2 eine zweite schematische Ansicht des Aktors gemäß dem ersten Ausführungsbeispiel der Erfindung,
Fig. 3 eine dritte schematische Ansicht des Aktors gemäß dem ersten Ausführungsbeispiel der Erfindung,
Fig. 4 eine vierte schematische Ansicht des Aktors gemäß dem ersten Ausführungsbeispiel der Erfindung mit geöffnetem Gehäuse,
Fig. 5 eine schematische Explosionsdarstellung eines Aktors gemäß einem zweiten Ausführungsbeispiel der Erfindung, und
Fig. 6 eine schematische Explosionsdarstellung eines Aktors gemäß einem dritten Ausführungsbeispiel der Erfindung.

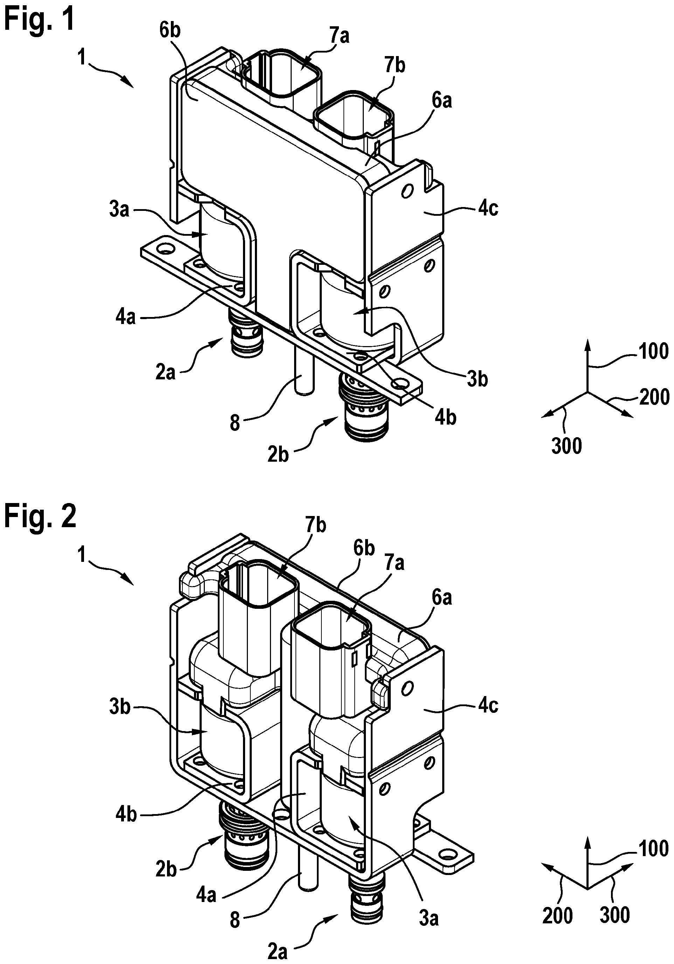

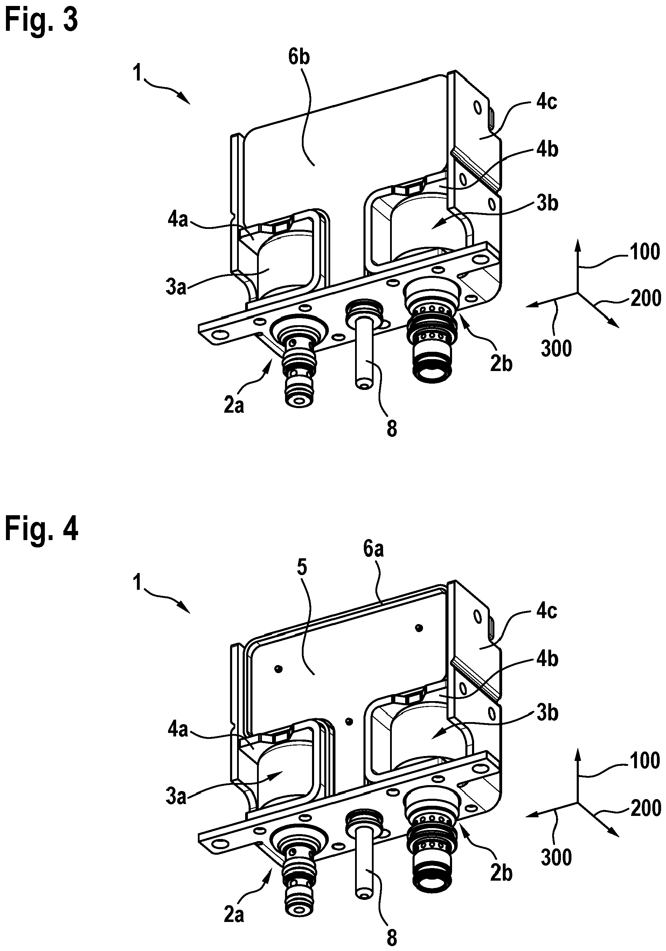

Figur 1 zeigt schematisch einen elektrohydraulischen Aktor 1 gemäß einem ersten Ausführungsbeispiel der Erfindung. Die Figuren 2 und 3 zeigen weitere schematische Ansichten des Aktors 1 aus Figur 1. In Figur 4 ist eine weitere schematische Ansicht des Aktors 1 gezeigt, wobei ein Gehäuse 6a, 6b des Aktors 1 geöffnet ist, um ein Innenleben des Gehäuses 6a, 6b darzustellen.

Der Aktor 1 weist ein erstes Hydraulikventil 2a und ein zweites Hydraulikventil 2b auf. Das erste Hydraulikventil 2a ist über eine erste elektrische Spule 3a ansteuerbar, das zweite Hydraulikventil 2b ist über eine zweite elektrische Spule 3b elektrisch ansteuerbar.

Weiterhin ist ein Rahmen 4a, 4b, 4c vorgesehen, der einen ersten Abschnitt 4a, einen zweiten Abschnitt 4b und einen dritten Abschnitt 4c aufweist. Der Rahmen 4a, 4b, 4c ist aus einem weichmagnetischen Material gefertigt. Es ist außerdem vorgesehen, dass der Rahmen 4a, 4b, 4c die erste Spule 3a und die zweite Spule 3b bezüglich einer ersten Raumrichtung 100 und einer zweiten Raumrichtung 200 umgibt und bezüglich einer dritten Raumrichtung 300 nicht verdeckt.

Hierzu ist vorgesehen, dass der erste Abschnitt 4a, der zweite Abschnitt 4b und der dritte Abschnitt 4c jeweils C-förmig ausgebildet sind. Der erste Abschnitt 4a und der zweite Abschnitt 4b sind insbesondere gleich groß und spiegelsymmetrisch zueinander aufgebaut. Der dritte Abschnitt 4c ist insbesondere größer als der erste Abschnitt 4a und der zweite Abschnitt 4b. Der erste Abschnitt 4a umgreift die erste Spule 3a und der zweite Abschnitt 4b umgreift die zweite Spule 3b. Der dritte Abschnitt 4c umgreift die erste Spule 3a zusammen mit dem ersten Abschnitt 4a und die zweite Spule 3b zusammen mit dem zweiten Abschnitt 4b derart, dass die erste Spule 3a durch den ersten Abschnitt 4a und einen Teil des dritten Abschnitts 4c sowie die zweite Spule 3b durch den zweiten Abschnitt 4b und zumindest einen Teil des dritten Abschnitts 4c bezüglich der ersten Raumrichtung 100 und der zweiten Raumrichtung 200 ringförmig umschlossen sind.

Der Rahmen 4a, 4b, 4c ist aus einem weichmagnetischen Material, insbesondere einem Metall, hergestellt und dient für den magnetischen Schluss des ersten Hydraulikventils 2a und des zweiten Hydraulikventils 2b. Für den magnetischen Schluss ist ausreichend, dass die Spulen 3a, 3b bezüglich der ersten Raumrichtung 100 und der zweiten Raumrichtung 200 umschlossen sind, sodass ein ringförmiges und damit im Wesentlichen zweidimensionales Umschließen vorgesehen ist. Durch das nicht Umschließen bezüglich der dritten Raumrichtung 300 ist erreicht, dass entlang dieser dritten Raumrichtung 300 kein Rahmen 4a, 4b, 4c an der ersten Spule 3a und der zweiten Spule 3b anliegt. Somit ist eine Abmessung entlang der dritten Raumrichtung minimiert.

Wie in Figur 4 gezeigt ist, weist der Aktor 1 eine Steuerplatine 5 zur Steuerung der ersten Spule 3a des ersten Hydraulikventils 2a und der zweiten Spule 3b des zweiten Hydraulikventils 2b auf. Die Steuerplatine 5 ist innerhalb eines Gehäuses 6a, 6b angeordnet. Dabei ist vorgesehen, dass das Gehäuse einen Hauptteil 6a und einen Deckelteil 6b aufweist, wobei der Hauptteil 6a eine Aufnahme für die Steuerplatine 5 bildet. Der Hauptteil 6a ist außerdem als Umspritzung der ersten Spule 3a und der zweiten Spule 3b ausgebildet, wobei innerhalb der Umspritzung auch eine Verkabelung (nicht gezeigt) der Spulen 3a, 3b zu der Aufnahme für die Steuerplatine 5 geführt ist. Mit anderen Worten sind die Spulen 3a, 3b gemeinsam mit ihrer jeweiligen Verkabelung zu der Steuerplatine 5 durch den Hauptteil 6a umspritzt. An der Aufnahme für die Steuerplatine 5 sind somit Kontaktenden vorhanden, über die eine Kontaktierung zwischen Spulen 3a, 3b und Steuerplatine 5 herstellbar ist. Dabei ist insbesondere jede Spule 3a, 3b separat mit der Steuerplatine 5 kontaktierbar.

Außerdem ist vorgesehen, dass der Hauptteil 6a einen ersten elektrischen Anschluss 7a und einen zweiten elektrischen Anschluss 7b aufweist. Der erste elektrische Anschluss 7a und der zweite elektrische Anschluss 7b sind bevorzugt als Steckverbinder ausgelegt und dienen zur Aufnahme eines entsprechenden Gegensteckverbinders. Elektrische Kontaktelemente (nicht gezeigt) des ersten elektrischen Anschlusses 7a und des zweiten elektrischen Anschlusses 7b sind separat voneinander zu der Steuerplatine 5 geführt und kontaktieren die Steuerplatine 5 separat. Insbesondere ist vorgesehen, dass die elektrischen Kontaktelemente des ersten elektrischen Anschlusses 7a und des zweiten elektrischen Anschlusses 7b durch den Hauptteil 6a analog zu der Verkabelung er Spulen 3a, 3b umspritzt sind.

Der erste elektrische Anschluss 7a und der zweite elektrische Anschluss 7b bilden bevorzugt die Schnittstellen zum Anschließen des Aktors 1 an eine Steuerung. Dabei ist vorgesehen, dass der erste elektrische Anschluss 7a und der zweite elektrische Anschluss 7b über die Steuerplatine 5 verbunden und somit gleichwertig sind. Dies ermöglicht den Aufbau eines Daisy Chain und damit eine einfache Verkabelung, da bei Verwendung mehrerer Aktoren 1 nicht jeder Aktor 1 eine eigene Verkabelung mit der Steuerung benötigt, sondern vielmehr mit einem benachbarten Aktor 1 verbunden werden kann. Somit muss lediglich einer der Aktoren 1 mit der Steuerung verbunden sein. Die von der Steuerung versandten Signale werden durch die Verbindung auf der Steuerplatine 5 zwischen dem ersten elektrischen Anschluss 7a und dem zweiten elektrischen Anschluss 7b durchgeschleust. Dies ist vor allem vorteilhaft für in Fahrzeugen üblicherweise verwendete Bussysteme wie CAN-Bus oder LIN-Bus.

Der Hauptteil 6a des Gehäuses ist durch den Deckelteil 6b verschlossen. Dabei ist vorgesehen, dass der Deckelteil 6b mit dem Hauptteil 6a stoffschlüssig verbunden, beispielsweise verschweißt, ist. Auf diese Weise ist eine mediendichte Verbindung vorhanden. Alternativ kann der Deckelteil 6b auch über eine andere Verbindungsart mit dem Hauptteil 6a verbunden sein, beispielsweise durch eine Verschraubung oder durch Verrasten. In diesem Fall ist zum Sicherstellen der Mediendichtheit bevorzugt eine Dichtung zwischen Deckelteil 6b und Hauptteil 6a vorhanden.

Das Gehäuse 6a, 6b ist bevorzugt aus einem medienfesten Kunststoff gebildet. Das Gehäuse 6a, 6b ist einteilig ausgestaltet und somit nicht zerstörungsfrei in mehrere Teile zerlegbar. Durch das Umspritzen der Spulen 3a, 3b und das Ausformen der elektrischen Anschlüsse 7a, 7b ist eine feste Anordnung dieser Komponenten zueinander gegeben. Die Steuerplatine 5 ist insbesondere in die Aufnahme des Hauptteils 6a einklipsbar und dadurch befestigbar. Die elektrischen Verbindungen zu den Spulen 3a, 3b und den elektrischen Anschlüssen 7a, 7b sind insbesondere als Press-Fit Kontakte ausgebildet, sodass ein Einbringen der Steuerplatine 5 in den Hauptteil 6a des Gehäuses zu einer gleichzeitigen Kontaktierung mit den genannten Komponenten führt. Dadurch ist die Montage einfach und aufwandsarm ermöglicht. Nach Montage der Steuerplatine 5 lässt sich der Deckelteil 6b mit dem Hauptteil 6a verschweißen, um somit auch die Steuerplatine 5 mediendicht abzuschirmen.

Der Rahmen 4a, 4b, 4c ist vollständig außerhalb des Gehäuses 6a, 6b angeordnet. Somit ist insbesondere eine einfache Montage von Rahmen 4a, 4b, 4c und Gehäuse 6a, 6b erreicht. Das Gehäuse 6a, 6b lässt sich bevorzugt an dem Rahmen 4a, 4b, 4c befestigen, wobei der Rahmen 4a, 4b, 4c eine Festigkeit und/oder einen Schlagschutz für das Gehäuse 6a, 6b erhöht. Außerdem ist der Rahmen 4a, 4b, 4c bevorzugt zur Befestigung des Aktors 1 an anderen Komponenten vorgesehen.

Der Aktor 1 weist außerdem einen Positionsschieber 8 auf, der gegenüber dem Rahmen 4a, 4b, 4c verschiebbar ist. Eine Erfassung einer Position des Positionsschieber 8 erfolgt bevorzugt durch einen auf der Steuerplatine 5 angebrachten kontaktlosen Sensor. Der Sensor ist insbesondere ein Hallsensor, der zum Erfassen eines Verschiebungszustandes eines Permanentmagneten des Positionsschiebers 8 ausgebildet ist. Der Positionsschieber 8 ist dabei durch das Gehäuse 6a, 6b von der Steuerplatine 5 getrennt. Somit ist insbesondere kein Gehäusedurchbruch für den Positionsschieber 8 notwendig. Dies verbessert die Mediendichtheit des Gehäuses 6a, 6b. Der Positionsschieber 8 erlaubt ein Erfassen eines Zustands eines von dem Aktor 1 aktuierten Systems, sodass ein geschlossener Regelkreis zum Aktuieren des Systems herstellbar ist.

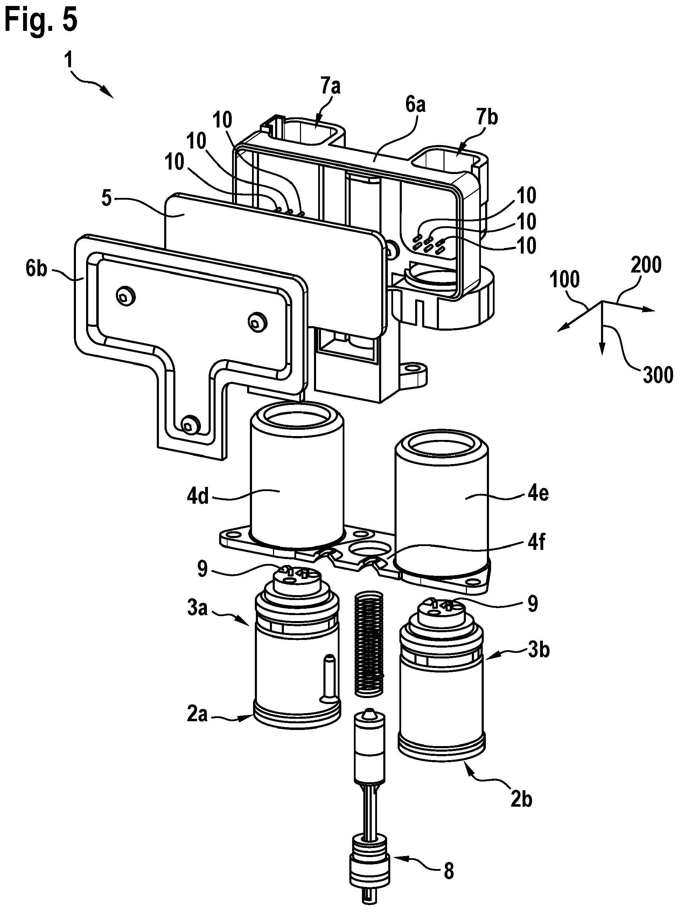

Figur 5 zeigt schematisch eine Explosionsdarstellung eines elektrohydraulischen Aktors 1 gemäß einem zweiten Ausführungsbeispiel der Erfindung. Der Aktor 1 weist auch in dem zweiten Ausführungsbeispiel ein erstes Hydraulikventil 2a und ein zweites Hydraulikventil 2b auf. Das erste Hydraulikventil 2a ist über eine erste elektrische Spule 3a ansteuerbar, das zweite Hydraulikventil 2b ist über eine zweite elektrische Spule 3b elektrisch ansteuerbar.

Weiterhin ist ein Rahmen 4d, 4e, 4f vorgesehen, ein erstes Topfelement 4d, ein zweites Topfelement 4e und ein Verbindungselement 4f aufweist. Der Rahmen 4d, 4e, 4f ist aus einem weichmagnetischen Material gefertigt, beispielsweise aus einem metallischen Werkstoff. Es ist außerdem vorgesehen, dass der Rahmen 4d, 4e, 4f die erste Spule 3a und die zweite Spule 3b bezüglich einer ersten Raumrichtung 100 und einer zweiten Raumrichtung 200 umgibt und bezüglich einer dritten Raumrichtung 300 nicht oder lediglich teilweise verdeckt. Die erste Raumrichtung 100 und die dritte Raumrichtung 300 sind im Vergleich zu dem ersten Ausführungsbeispiel unterschiedlich.

Das erste Topfelement 4d umschließt die erste Spule 3a ringförmig oder topfförmig. Das zweite Topfelement 4e umschließt die zweite Spule 3b ringförmig oder topfförmig. Somit ist die erste Spule 3a durch das erste Topfelement 4d bezüglich der ersten Raumrichtung 100 und der zweiten Raumrichtung 200 ringförmig umschlossen. Die zweite Spule 3b ist durch das zweite Topfelement 4e bezüglich der ersten Raumrichtung 100 und der zweiten Raumrichtung 200 ringförmig umschlossen.

Das Umschließen der ersten Spule 3a und der zweiten Spule 3b erfolgt mittels der Mantelfläche des jeweiligen Topfelements 4d, 4e. Die dritte Raumrichtung 300 entspricht der Axialrichtung des Topfelements 4d, 4e sowie der Hydraulikventile 2a, 2b, wobei die zugehörige Spule 3a, 3b nicht oder nur teilweise umgeben ist. Jedes Topfelement 4d, 4e weist eine Grundfläche auf, die die jeweilige Spule 3a, 3b teilweise aber nicht vollständig in der dritten Raumrichtung 300 umgibt. Die Grundfläche ist keine durchgängige Fläche und weist einen Ausschnitt auf, durch den erste elektrisch Kontaktelemente 9 der jeweiligen Spule 3a, 3b greifen, was unten nähererläutert ist.

Das Verbindungselement 4f dient zum Verbinden des ersten Topfelements 4d und des zweiten Topfelements 4e. Besonders vorteilhaft sind das erste Topfelemente 4d und das zweite Topfelement 4e untrennbar oder einstückig mit dem Verbindungselement 4f verbunden. In dem zweiten Ausführungsbeispiel sind das erste Topfelement 4d und das zweite Topfelement 4e als separate Tiefziehbauteile ausgebildet. Es ist vorgesehen, dass das erste Topfelement 4d und das zweite Topfelement 4e an dem Verbindungselement 4f befestigt sind. Die Befestigung erfolgt insbesondere durch eine formschlüssige und/oder stoffschlüssige und/oder kraftschlüssige Verbindung, beispielsweise durch Verstemmen und/oder Verkleben und/oder Verschweißen und/oder Verschrauben. Das Verbindungselement 4f ist in dem zweiten Ausführungsbeispiel ein Stanzteil oder Stanzbiegeteil.

Das erste Hydraulikventil 2a ist in dem ersten Topfelement 4d und das zweite Hydraulikventil 2b ist in dem zweite Topfelement 4e befestigt. Auf diese Weise ist das eine einfache und zuverlässige Halterung des jeweiligen Hydraulikventils 2a, 2b erreicht.

Der Rahmen 4d, 4e, 4f dient für den magnetischen Schluss des ersten Hydraulikventils 2a und des zweiten Hydraulikventils 2b. Für den magnetischen Schluss ist ausreichend, dass die Spulen 3a, 3b bezüglich der ersten Raumrichtung 100 und der zweiten Raumrichtung 200 umschlossen sind, sodass ein ringförmiges und damit im Wesentlichen zweidimensionales Umschließen vorgesehen ist. Durch das nicht Umschließen bzw. nur teilweise Umschließen bezüglich der dritten Raumrichtung 300 ist erreicht, dass entlang dieser dritten Raumrichtung 300 kein Rahmen 4d, 4e, 4f oder nur ein geringer Anteil an der ersten Spule 3a und der zweiten Spule 3b anliegt. Somit ist eine Abmessung entlang der dritten Raumrichtung minimiert.

Der Aktor 1 weist auch in dem zweiten Ausführungsbeispiel eine Steuerplatine 5 zur Steuerung der ersten Spule 3a des ersten Hydraulikventils 2a und der zweiten Spule 3b des zweiten Hydraulikventils 2b auf. Die Steuerplatine 5 ist innerhalb eines Gehäuses 6a, 6b angeordnet. Dabei ist vorgesehen, dass das Gehäuse einen Hauptteil 6a und einen Deckelteil 6b aufweist, wobei der Hauptteil 6a eine Aufnahme für die Steuerplatine 5 bildet. Der Hauptteil 6a ist außerdem als Umspritzung der ersten Spule 3a und der zweiten Spule 3b ausgebildet, wobei innerhalb der Umspritzung erste elektrische Kontaktelemente 9 der Spulen 3a, 3b zu der Aufnahme für die Steuerplatine 5 geführt ist. Mit anderen Worten sind die Spulen 3a, 3b gemeinsam mit ihrer jeweiligen Verkabelung zu der Steuerplatine 5 durch den Hauptteil 6a umspritzt. An der Aufnahme für die Steuerplatine 5 sind somit Kontaktenden der ersten elektrischen Kontaktelemente 9 vorhanden, über die eine Kontaktierung zwischen Spulen 3a, 3b und Steuerplatine 5 herstellbar ist. Dabei ist insbesondere jede Spule 3a, 3b separat mit der Steuerplatine 5 kontaktierbar.

Außerdem ist vorgesehen, dass der Hauptteil 6a einen ersten elektrischen Anschluss 7a und einen zweiten elektrischen Anschluss 7b aufweist. Der erste elektrische Anschluss 7a und der zweite elektrische Anschluss 7b sind bevorzugt als Steckverbinder ausgelegt und dienen zur Aufnahme eines entsprechenden Gegensteckverbinders. Zweite elektrische Kontaktelemente 10 des ersten elektrischen Anschlusses 7a und des zweiten elektrischen Anschlusses 7b sind separat voneinander zu der Steuerplatine 5 geführt und kontaktieren die Steuerplatine 5 separat. Insbesondere ist vorgesehen, dass die ersten elektrischen Kontaktelemente 9 der ersten Spule 3a und zweiten Spule 3b sowie die zweiten elektrischen Kontaktelemente 10 des ersten elektrischen Anschlusses 7a und des zweiten elektrischen Anschlusses 7b durch den Hauptteil 6a umspritzt sind.

Der erste elektrische Anschluss 7a und der zweite elektrische Anschluss 7b bilden bevorzugt die Schnittstellen zum Anschließen des Aktors 1 an eine Steuerung. Dabei ist vorgesehen, dass der erste elektrische Anschluss 7a und der zweite elektrische Anschluss 7b über die Steuerplatine 5 verbunden und somit gleichwertig sind. Dies ermöglicht den Aufbau eines Daisy Chain und damit eine einfache Verkabelung, da bei Verwendung mehrerer Aktoren 1 nicht jeder Aktor 1 eine eigene Verkabelung mit der Steuerung benötigt, sondern vielmehr mit einem benachbarten Aktor 1 verbunden werden kann. Somit muss lediglich einer der Aktoren 1 mit der Steuerung verbunden sein. Die von der Steuerung versandten Signale werden durch die Verbindung auf der Steuerplatine 5 zwischen dem ersten elektrischen Anschluss 7a und dem zweiten elektrischen Anschluss 7b durchgeschleust. Dies ist vor allem vorteilhaft für in Fahrzeugen üblicherweise verwendete Bussysteme wie CAN-Bus oder LIN-Bus.

Der Hauptteil 6a des Gehäuses ist durch den Deckelteil 6b verschlossen. Dabei ist vorgesehen, dass der Deckelteil 6b mit dem Hauptteil 6a stoffschlüssig verbunden, beispielsweise verschweißt, ist. Auf diese Weise ist eine mediendichte Verbindung vorhanden. Alternativ kann der Deckelteil 6b auch über eine andere Verbindungsart mit dem Hauptteil 6a verbunden sein, beispielsweise durch eine Verschraubung oder durch Verrasten. In diesem Fall ist zum Sicherstellen der Mediendichtheit bevorzugt eine Dichtung zwischen Deckelteil 6b und Hauptteil 6a vorhanden.

Das Gehäuse 6a, 6b ist bevorzugt aus einem medienfesten Kunststoff gebildet. Das Gehäuse 6a, 6b ist einteilig ausgestaltet und somit nicht zerstörungsfrei in mehrere Teile zerlegbar. Durch das Umspritzen der Spulen 3a, 3b und das Ausformen der elektrischen Anschlüsse 7a, 7b ist eine feste Anordnung dieser Komponenten zueinander gegeben. Die Steuerplatine 5 ist insbesondere in die Aufnahme des Hauptteils 6a einklipsbar und dadurch befestigbar. Die elektrischen Verbindungen zu den Spulen 3a, 3b und den elektrischen Anschlüssen 7a, 7b sind insbesondere als Press-Fit Kontakte ausgebildet, sodass ein Einbringen der Steuerplatine 5 in den Hauptteil 6a des Gehäuses zu einer gleichzeitigen Kontaktierung mit den genannten Komponenten führt. Dadurch ist die Montage einfach und aufwandsarm ermöglicht. Nach Montage der Steuerplatine 5 lässt sich der Deckelteil 6b mit dem Hauptteil 6a verschweißen, um somit auch die Steuerplatine 5 mediendicht abzuschirmen.

Der Aktor 1 weist außerdem einen Positionsschieber 8 analog zu dem ersten Ausführungsbeispiel auf.

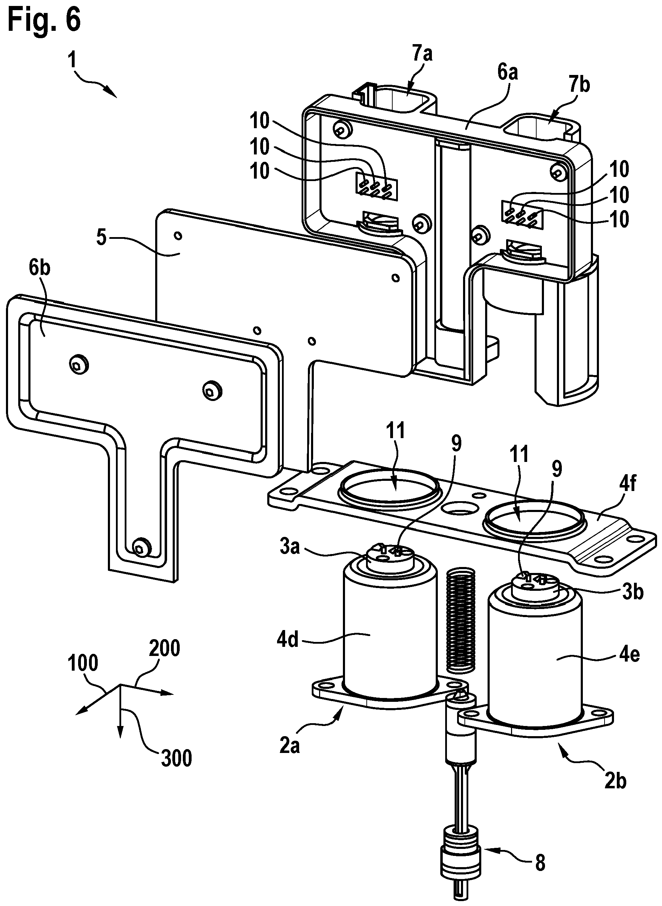

Figur 6 zeigt schematisch eine Explosionsdarstellung eines elektrohydraulischen Aktors 1 gemäß einem dritten Ausführungsbeispiel der Erfindung. Das dritte Ausführungsbeispiel ist im Wesentlichen identisch zu dem zweiten Ausführungsbeispiel. Es ist lediglich die Form des Verbindungselements 4f unterschiedlich, das in dem dritten Ausführungsbeispiel jeweils eine Öffnung 11 für jedes Topfelement 4d, 4e aufweist. Das jeweilige Topfelement 4d, 4e kann durch die Öffnung 11 des Verbindungselements 4f geführt werden, wobei wiederum vorgesehen ist, dass jedes Topfelement 4d, 4e mit dem Verbindungselement 4f stoffschlüssig und/oder formschlüssig und/oder kraftschlüssig verbunden ist, beispielsweise durch Verstemmen und/oder Verkleben und/oder Verschweißen und/oder Verschrauben.

Neben der vorstehenden schriftlichen Beschreibung der Erfindung wird zu deren ergänzender Offenbarung hiermit explizit auf die zeichnerische Darstellung der Erfindung in den Fig. 1 bis 4 Bezug genommen.

### Bezugszeichenliste

- 1: elektrohydraulischer Aktor
- 2a: erstes Hydraulikventil
- 2b: zweites Hydraulikventil
- 3a: erste Spule
- 3b: zweite Spule
- 4a: erster Abschnitt des Rahmens
- 4b: zweiter Abschnitt des Rahmens
- 4c: dritter Abschnitt des Rahmens
- 4d: erstes Topfelement des Rahmens
- 4e: zweites Topfelement des Rahmens
- 4f: Verbindungselement des Rahmens
- 5: Steuerplatine
- 6a: Hauptteil des Gehäuses
- 6b: Deckelteil des Gehäuses
- 7a: erster elektrischer Anschluss
- 7b: zweiter elektrischer Anschluss
- 8: Positionsschieber
- 9: erste elektrische Kontaktelemente
- 10: zweite elektrische Kontaktelemente
- 11: Öffnung

## Patentansprüche

1. Elektrohydraulischer Aktor (1) aufweisend
• zumindest ein Hydraulikventil (2a, 2b) mit einer elektrischen Spule (3a, 3b),
• zumindest einen Rahmen (4a, 4b, 4c, 4d, 4e, 4f) aus einem weichmagnetischen Material, der die Spule (3a, 3b) bezüglich einer ersten Raumrichtung (100) und einer zweiten Raumrichtung (200) umgibt und bezüglich einer dritten Raumrichtung (300) nicht oder nicht vollständig verdeckt,
• eine Steuerplatine (5) zur Steuerung der Spule (3a, 3b) des Hydraulikventils (2a, 2b), und
• ein Gehäuse (6a, 6b), wobei das Gehäuse (6a, 6b) die Spule (3a, 3b) und die Steuerplatine (5) mediendicht umschließt und zumindest einen elektrischen Anschluss (7a, 7b) zum elektrischen Kontaktieren der Steuerplatine (5) aufweist,
• wobei der Rahmen (4a, 4b, 4c, 4d, 4e, 4f) zumindest teilweise, insbesondere vollständig, außerhalb des Gehäuses (6a, 6b) angeordnet ist.

2. Elektrohydraulischer Aktor (1) nach Anspruch 1, **dadurch gekennzeichnet, dass** das Gehäuse (6a, 6b) einen Hauptteil (6a) und einen Deckelteil (6b) aufweist, wobei der Hauptteil (6a) eine Aufnahme für die Steuerplatine (5) bildet und durch den Deckelteil (6b) verschlossen ist.

3. Elektrohydraulischer Aktor (1) nach Anspruch 2, **dadurch gekennzeichnet, dass** der Deckelteil (6b) mit dem Hauptteil (6a) stoffschlüssig verbunden, insbesondere verschweißt, ist oder dass der Deckelteil (6b) an dem Hauptteil (6a) lösbar befestigt ist, insbesondere mit einer dazwischenliegenden Dichtung.

4. Elektrohydraulischer Aktor (1) nach einem der vorhergehenden Ansprüche, **dadurch gekennzeichnet, dass** das Gehäuse (6a, 6b) durch Umspritzen der Spule (3a, 3b) ausgebildet ist.

5. Elektrohydraulischer Aktor (1) nach einem der vorhergehenden Ansprüche, **dadurch gekennzeichnet, dass** das Gehäuse (6a, 6b) aus Kunststoff gefertigt ist.

6. Elektrohydraulischer Aktor (1) nach einem der vorhergehenden Ansprüche, **dadurch gekennzeichnet, dass** das Gehäuse (6a, 6b) einteilig ausgebildet ist.

7. Elektrohydraulischer Aktor (1) nach einem der vorhergehenden Ansprüche, **dadurch gekennzeichnet, dass** das Gehäuse einen ersten elektrischen Anschluss (7a) und einen zweiten elektrischen Anschluss (7b) aufweist, wobei elektrische Kontaktelemente, insbesondere Pins, des ersten elektrischen Anschlusses (7a) und des zweiten elektrischen Anschlusses (7b) separat voneinander die Steuerplatine (5) kontaktieren und über die Steuerplatine (5) miteinander verbunden sind, insbesondere um eine Daisy Chain-Ansteuerung zu ermöglichen.

8. Elektrohydraulischer Aktor (1) nach einem der vorhergehenden Ansprüche, **dadurch gekennzeichnet, dass** der Rahmen (4a, 4b, 4c, 4d, 4e, 4f) zumindest ein Hohlzylinderelement oder Topfelement (4d, 4e) aufweist, das die Spule (3a, 3b) zumindest ringförmig umschließt.

9. Elektrohydraulischer Aktor (1) nach einem der vorhergehenden Ansprüche, **dadurch gekennzeichnet, dass** der Aktor (1) ein erstes Hydraulikventil (2a) mit einer ersten Spule (3a) und ein zweites Hydraulikventil (2b) mit einer zweiten Spule (3b) aufweist, wobei die Spulen (3a, 3b) die Steuerplatine (5) separat kontaktieren und innerhalb desselben Gehäuses (6a, 6b) angeordnet sind.

10. Elektrohydraulischer Aktor (1) nach Anspruch 8, **dadurch gekennzeichnet, dass** der Rahmen (4a, 4b, 4c, 4d, 4e, 4f) einen C-förmigen ersten Abschnitt (4a), einen C-förmigen zweiten Abschnitt (4b) und einen C-förmigen dritten Abschnitt (4c) aufweist, wobei der erste Abschnitt (4a) die erste Spule (3a) und der zweite Abschnitt (4b) die zweite Spule (3b) umgreifen, und wobei der dritte Abschnitt (4c) die erste Spule (3a) zusammen mit dem ersten Abschnitt (4a) und die zweite Spule (3b) zusammen mit dem zweiten Abschnitt (4b) derart umgreift, dass die erste Spule (3a) durch den ersten Abschnitt (4a) und einen Teil des dritten Abschnitts (4c) bezüglich der ersten Raumrichtung (100) und der zweiten Raumrichtung (200) ringförmig umschlossen ist und/oder die zweite Spule (3b) durch den zweiten Abschnitt (4b) und zumindest einen Teil des dritten Abschnitts (4c) bezüglich der ersten Raumrichtung (100) und der zweiten Raumrichtung (200) ringförmig umschlossen ist.

11. Elektrohydraulischer Aktor (1) nach Anspruch 9, **dadurch gekennzeichnet, dass** jeder Abschnitt des Rahmens (4a, 4b, 4c, 4d, 4e, 4f) ein separates Stanzbiegeteil ist.

12. Elektrohydraulischer Aktor (1) nach einem der Ansprüche 8 bis 10, **dadurch gekennzeichnet, dass** der Rahmen (4a, 4b, 4c, 4d, 4e, 4f) ein erstes Topfelement (4d) und ein zweites Topfelement (4e) aufweist,
• wobei die erste Spule (3a) durch das erste Topfelement (4d) bezüglich der ersten Raumrichtung (100) und der zweiten Raumrichtung (200) ringförmig umschlossen ist und/oder die zweite Spule (3b) durch das zweite Topfelement (4e) bezüglich der ersten Raumrichtung (100) und der zweiten Raumrichtung (200) ringförmig umschlossen ist, und
• wobei der Rahmen (4a, 4b, 4c, 4d, 4e, 4f) bevorzugt ein Verbindungselement (4f) aufweist, durch das das erste Topfelement (4d) und das zweite Topfelement (4e) verbunden sind.

13. Elektrohydraulischer Aktor (1) nach Anspruch 12, **dadurch gekennzeichnet, dass** das erste das erste Topfelement (4d) und das zweite Topfelement (4e) als separate Bauteile, insbesondere Tiefziehbauteile, ausgebildet sind, wobei das erste Topfelement (4d) und das zweite Topfelement (4d) an dem Verbindungselement (4f), das bevorzugt ein Stanzteil oder Stanzbiegeteil ist, befestigt sind.

14. Elektrohydraulischer Aktor (1) nach Anspruch 13, **dadurch gekennzeichnet, dass** das erste das erste Topfelement (4d) und das zweite Topfelement (4e) durch jeweilige Öffnungen (11) des Verbindungselements (4f) geführt sind.

15. Elektrohydraulischer Aktor (1) nach einem der vorhergehenden Ansprüche, **gekennzeichnet durch** einen gegenüber dem Rahmen (4a, 4b, 4c, 4d, 4e, 4f) verschiebbaren Positionsschieber (8), wobei die Steuerplatine (5) einen kontaktlosen Sensor, insbesondere Hallsensor, zum Erfassen eines Verschiebungszustandes des Positionsschiebers (8) aufweist, und wobei der Positionsschieber (8) durch das Gehäuse (6a, 6b) von der Steuerplatine (5) getrennt ist.
